# EUROPEAN PATENT SPECIFICATION

(11) **EP 3 521 060 B1**
(45) Date of publication and mention of the grant of the patent: **03.02.2021**
(21) Application number: 18213415.5
(22) Date of filing: 18.12.2018
(51) Int. Cl.: B60C 9/22, B60C 9/26, B60C 9/18

(54) **MOTORCYCLE TIRE**
MOTORRADREIFEN
PNEUMATIQUE DE MOTO

(30) Priority: 01.02.2018 JP 2018016627
(43) Date of publication of application: 07.08.2019
(73) Proprietor: Sumitomo Rubber Industries Ltd., Kobe-shi, Hyogo 651-0072 (JP)
(72) Inventor: SATO, Ryota, Kobe-shi,, Hyogo 651-0072 (JP)
(74) Representative: TBK

(56) References cited:
- EP-A1- 3 225 427
- EP-A1- 3 366 492
- EP-A2- 2 261 060
- JP-A- H05 178 007

## Description

### Technical Field

The present invention relates to a motorcycle tire, more particularly to a tread reinforcing layer capable of improving cornering performance.

### Background Art

JP 2017 177842 A discloses a motorcycle tire provided in the tread portion with a band composed a center portion having a spiral cord structure, and shoulder portions on both sides thereof having a mesh-like cord structure. As a result, relatively, the torsional rigidity of the shoulder portions is enhanced, and the turning or cornering performance is improved. EP 3 225 427 A1, EP 2 261 060 A2 and JP H05 178007 A disclose further motorcycle tires. EP 3 366 492 A1 falls under Art. 54(3) EPC and does not show the last feature of claim 1 wherein the rubber-coated cord strip forming the shoulder spiral part has only one reinforcing cord.

### Summary of the Invention

### Problems to be resolved by the Invention

In recent years, on the other hand, along with the improvement in performance of motorcycles, motorcycle tires are required to be further improved in cornering performance.

Therefore, the present invention was made in view of the above circumstances, and a primary object of the present invention is to provide a motorcycle tire improved in the turning or cornering performance.

The above object is achieved by a motorcycle tire having the features of claim 1. In the motorcycle tire according to the present invention, it is preferable that each of the middle reinforcing parts comprises a plurality of inner circumferential segments in which the rubber-coated cord strip extends in the tire circumferential direction continuously from axially inner ends of the first inclining segments and second inclining segments, and
the length in the tire circumferential direction of the inner circumferential segments is in a range from 50 % to 150 % of the maximum length in the tire circumferential direction of the spaces.

In the motorcycle tire according to the present invention, it is preferable that the width measured along the tread surface of the tread portion, of the shoulder spiral part, is not less than 5 % of the width measured along the tread surface of the tread portion, of the tread reinforcing layer.

In the motorcycle tire according to the present invention, it is preferable that the tread portion has a crown region between the middle regions, and
the tread reinforcing layer comprises a crown reinforcing part including a crown spiral part in which the rubber-coated cord strip is wound spirally and circumferentially of the tire, around the crown region more than one turn.

In the motorcycle tire according to the present invention, it is preferable that the width measured along the tread surface of the tread portion, of the crown spiral part is not less than 5 % of the width measured along the tread surface of the tread portion, of the tread reinforcing layer.

In the motorcycle tire according to the present invention, it is preferable that the rubber-coated cord strip forming the crown spiral part has only one reinforcing cord embedded therein.

In the motorcycle tire according to the present invention, the rubber-coated cord strip forming the shoulder spiral part has only one reinforcing cord embedded therein.

In the motorcycle tire according to the present invention, it is preferable that
both ends of each of the inner circumferential segments are connected to two of the circumferentially adjacent first inclining segments or alternatively two of the circumferentially adjacent second inclining segments.

In the motorcycle tire according to the present invention, it is preferable that each of the middle reinforcing parts comprises a plurality of circumferential segments in which the rubber-coated cord strip extends in the tire circumferential direction continuously from the axially inner ends of the first inclining segments and second inclining segments, and
both ends of each of circumferential segments are connected to one of first inclining segments and one of the second inclining segments.

### Effects of the Invention

The motorcycle tire according to the present invention comprises the middle reinforcing part formed from the rubber-coated cord strip wound around the middle region mainly contacting with the ground during cornering, and the shoulder reinforcing part formed from the rubber-coated cord strip wound around the shoulder region mainly contacting with the ground during full-bank cornering. The middle reinforcing part comprises the first inclining segments and the second inclining segments in which the rubber-coated cord strip is inclined to the opposite directions with respect to the tire axial direction. Such middle reinforcing part increases the torsional rigidity of the middle region to allow to generate larger cornering power.

The middle reinforcing parts is provided with the mesh structure having the plurality of rhombic spaces surrounded by the first inclining segments and the second inclining segments. Such middle reinforcing part increases the rigidity of the middle region because a tension acting on a part of the middle reinforcing part can be dispersed over a wide range of the mesh structure through portions of the rubber-coated cord strip intersecting with each other. Therefore, the middle reinforcing part helps to exert excellent cornering performance.

The shoulder reinforcing part includes the shoulder spiral part formed form the rubber-coated cord strip wound spirally and circumferentially of the tire more than one turn. Such shoulder reinforcing part suppresses an increase in the torsional rigidity of the shoulder region to allow to generate relatively small cornering power. Therefore, it is possible to reduce reaction forces and vibrations caused by, for example, gaps of a road surface, and the sense of ground contacting is improved. As a result, full-bank cornering becomes stable, and the cornering performance can be further improved.

Therefore, the motorcycle tire according to the present invention can exhibit excellent cornering performance.

### Brief Description of the Drawings

Fig. 1 is a cross sectional view of a motorcycle tire as an embodiment of the present invention.
Fig. 2 is a schematic perspective view of a rubber-coated cord strip.
Fig. 3 is a schematic developed plan view of the tread reinforcing layer.
Fig. 4(a) and Fig. 4(b) are diagrams showing another example of the shoulder reinforcing part.
Fig. 5 is an enlarged partial view showing the middle reinforcing part and the shoulder reinforcing part shown in Fig. 3.
Fig. 6 is an enlarged partial view showing the middle reinforcing part and the crown reinforcing part shown in Fig. 3.
Fig. 7 is a diagram for explaining a process of winding the rubber-coated cord strip.
Fig. 8(a) and Fig. 8(b) are diagrams for explaining a process of forming the middle reinforcing part of this embodiment.
Fig. 9(a) and Fig. 8(b) are diagrams for explaining a process of forming another example of the middle reinforcing part of this embodiment.
Fig. 10(a) and Fig. 10(b) show connection modes between the inclining portion and the circumferentially extending portion of the middle reinforcing part.

### Description of the Preferred Embodiments

Embodiments of the present invention will now be described in detail with reference to the accompanying drawings.

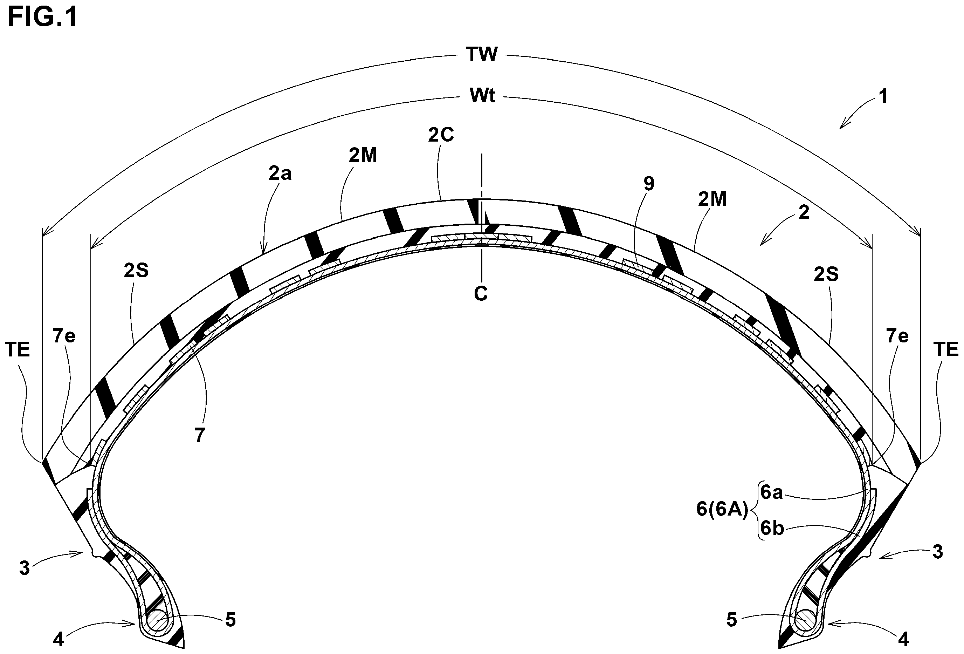

Fig. 1 is a meridian cross sectional view of a motorcycle tire as an embodiment of present invention under its normal state.

The "normal state" is a state in which the tire 1 is mounted on a standard rim (not shown), inflated to a standard pressure, and loaded with no tire load.

In the present specification, unless otherwise noted, dimensions of each part of the tire 1 refer to values measured under the normal state.

The "standard rim" is a rim specified for the tire in a standard system comprising the standard on which the tire 1 is based, for example, "Standard rim" for JATMA, "Design rim " for TRA, "Measuring rim " for ETRTO.

The "standard pressure" is an air pressure specified for the tire in a standard system comprising the standard on which the tire 1 is based, for example, "Maximum air pressure" for JATMA, "Inflation pressure" for ETRTO, Maximum value specified in "TIRE LOAD LIMITS AT VARIOUS COLD INFLATION PRESSURES" table for TRA.

As shown in Fig. 1, the tire 1 in this embodiment comprises a tread portion 2 having a tread surface 2a coming into contact with the ground, a toroidal carcass 6, and a tread reinforcing layer 7 disposed radially outside the carcass 6 in the tread portion 2.

The tread portion 2 is curved in an arc shape being convex toward the radially outside, and has a pair of tread edges TE. The tread edges TE are positioned on the most outsides in the tire axial direction.

The tread portion 2 has a pair of shoulder regions 2S, and a pair of middle regions 2M axially inside the respective shoulder regions 2S. The shoulder regions 2S are regions extending from the tread edges TE to the axially outer edges of the middle regions 2M. The shoulder regions 2S are region contacting with the ground mainly during full-bank cornering. The middle regions 2M are regions contacting with the ground mainly during cornering.

The tread portion 2 further comprises a crown region 2C between the middle regions 2M. The crown region 2C is a region including the tire equator C and contacting with the ground mainly during straight running at high speed.

The carcass 6 is composed of at least one carcass ply 6A. For example, the carcass ply 6A is made of carcass cords rubberized with an unvulcanized topping rubber, and arranged at an angle of 75 to 90 degrees with respect to the tire equator C. For example, the carcass ply 6A comprises a main portion 6a extending from the tread portion 2 to bead cores 5 on both sides disposed in the respective bead portions 4 through the respective sidewall portions 3, and a pair of turnup portions 6b extending continuously from the main portion 6a.

In the meridian cross section of the tire, the tread reinforcing layer 7 extends curvedly along the tread portion 2 and is formed over the substantially entire width of the tread portion 2. As a result, the tread reinforcing layer 7 can increase the rigidity of the tread portion 2 over the entire width of the tread portion 2.

From this point of view, it is preferable that the width Wt of the tread reinforcing layer 7 measured along the tread surface 2a of the tread portion 2 is set in a range from 75 % to 95 % of the width TW between the tread edges TE measured along the tread surface 2a of the tread portion 2, namely, the developed tread width TW.

The tread reinforcing layer 7 of this embodiment is formed by winding a rubber-coated cord strip 9 around the carcass 6.

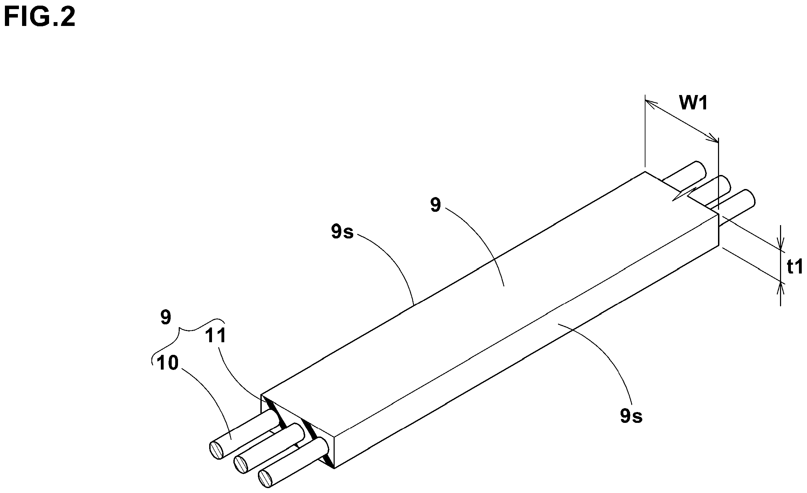

Fig. 2 is a perspective view of a part of the rubber-coated cord strip 9. As shown in Fig. 2, the rubber-coated cord strip 9 has two side edges 9s extending in the longitudinal direction thereof, and has a substantially rectangular cross sectional shape. The width w1 of the rubber-coated cord strip 9 is preferably set in a range from 2.5 to 12.0 mm, for example. The thickness t1 of the rubber-coated cord strip 9 is preferably set in a range from 0.6 to 3.0 mm, for example.

For example, the rubber-coated cord strip 9 is formed by covering one or more reinforcing cords 10 with an unvulcanized topping rubber 11. For example, steel cords and/or organic fiber cords are preferably used as the reinforcing cords 10. In this embodiment, the reinforcing cords 10 extend in parallel with the side edge 9s.

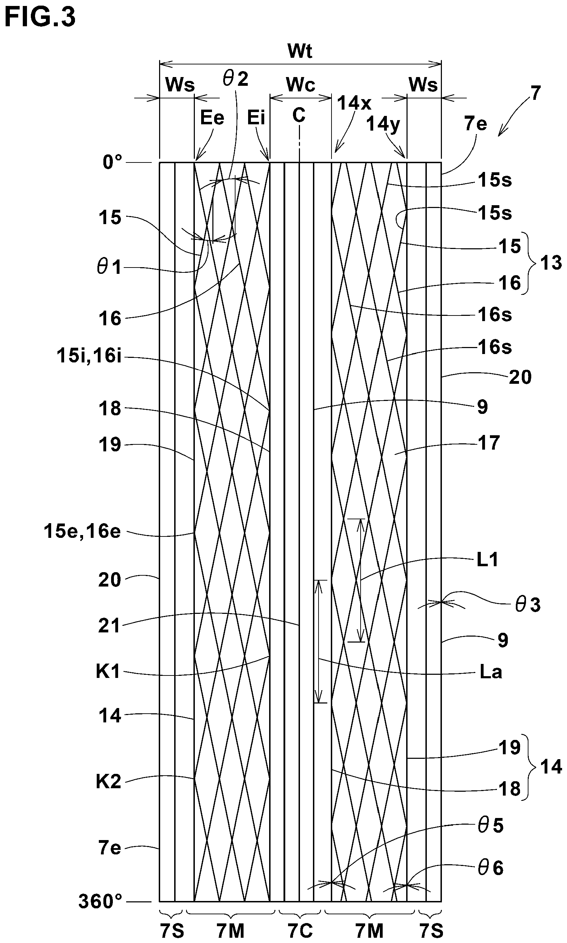

Fig. 3 is a developed plan view of the tread reinforcing layer 7 which is developed in the tire circumferential direction and axial direction. In Fig. 3, the rubber-coated cord strip 9 is indicated by a single solid line (corresponding to the center line in the widthwise direction) for convenience sake. The length between the upper and lower ends in Fig. 3 of the tread reinforcing layer 7 corresponds to the entire circumferential length of the tread reinforcing layer 7.

As shown in Fig. 3, the tread reinforcing layer 7 comprises a pair of middle reinforcing parts 7M each formed by winding a rubber-coated cord strip 9 around one of the middle regions 2M, and a pair of shoulder reinforcing parts 7S each formed by winding a rubber-coated cord strip 9 around one of the shoulder regions 2S.
The middle reinforcing parts 7M and shoulder reinforcing parts 7S are formed from separate rubber-coated cord strips 9. However, it is also possible to use one continuous rubber-coated cord strip 9 for forming one of the middle reinforcing parts 7M and one of the shoulder reinforcing parts 7S which are adjacent to each other.

Further, the tread reinforcing layer 7 in this embodiment comprises a crown reinforcing part 7C formed by winding a rubber-coated cord strip 9 around the crown region 2C. The crown reinforcing part 7C in this embodiment is formed from a rubber-coated cord strip 9 separate from those of the middle reinforcing parts 7M. However, it is also possible to use one continuous rubber-coated cord strip for forming the crown reinforcing part 7C and the middle reinforcing parts 7M.

Each of the middle reinforcing parts 7M of this embodiment comprises a plurality of inclining segments 13 in which the rubber-coated cord strip 9 is inclined. Each of the middle reinforcing parts 7M has the inner edge Ei on the tire equator C side and the outer edge Ee on the tread edge TE side.

The plurality of inclining segments 13 of this embodiment includes a plurality of first inclining segments 15 inclined to one side (diagonally right up in the figure) with respect to the tire circumferential direction, and a plurality of second inclining segments 16 inclined to the other side (diagonally right down in the figure) opposite to the plurality of first inclining segments 15.
Such inclining segments 13 increase the torsional rigidity of the middle regions 2M to cause a high cornering power, therefore, the turning or cornering performance is improved.

In each of the middle reinforcing parts 7M, the side edges 15s of the first inclining segments 15 are arranged so as not to contact with each other, and the side edges 16s of the second inclining segments 16 are arranged so as not to contact with each other. Thereby, the middle reinforcing parts 7M are each formed as a mesh structure having a plurality of rhombic spaces 17 surrounded by the first inclining segments 15 and second inclining segments 16. As a result, a tension acting on a part of the middle reinforcing part 7M can be dispersed over a wide range of the mesh structure through portions of the rubber-coated cord strip 9 intersecting with each other, so the rigidity of the middle region 2M is increased and the cornering performance is improved.

In the present specification, the term "rhombic" shape refers to a shape surrounded by the first inclining segments 15 and second inclining segments 16 which segments extend straight, and it is not limited to a rhomboid in a strict sense, and it also includes a parallelogram and the like.
Further, the term "straight" is not limited to "straight" in a strict sense, and may be a slightly curved arc, for example, because the tread portion 2 is formed in an arc shape, but wavy and zigzag formed by repeating a unit are excluded.

In the middle reinforcing parts 7M, it is preferable that the first inclining segments 15 have an angle θ1 of more than 2 degrees, more preferably 3 to 10 degrees with respect to the tire circumferential direction, and
the second inclining segments 16 have an angle θ2 of more than 2 degrees, more preferably 3 to 10 degrees with respect to the tire circumferential direction.
By changing the angle θ1 and angle θ2, the cornering power of the tire can be adjusted.
It is preferable that the angle θ1 is the same as the angle θ2.

Each of the shoulder reinforcing parts 7S in this embodiment includes a shoulder spiral part 20 composed of a rubber-coated cord strip 9 wound spirally and circumferentially of the tire more than one turn so that the rubber-coated cord strip extends substantially in parallel with the tire circumferential direction.
Such shoulder spiral part 20 can suppress the increase in the torsional rigidity of the shoulder regions 2S to allow to generate a smaller cornering power.
Therefore, it is possible to reduce reaction forces and vibrations caused by, for example, gaps of a road surface, to increase the ground contact. As a result, the shoulder reinforcing part 7S can improve high-speed stability performance. In this embodiment, each of the shoulder reinforcing parts 7S is made up of the shoulder spiral part 20 only.

In this specification, the expansion "the rubber-coated cord strip extends substantially in parallel with the tire circumferential direction" means that the angle of the rubber-coated cord strip 9 is in a range from 0 to 8 degrees with respect to the tire circumferential direction. In this specification, the values of the angle θ3 with respect to the tire circumferential direction in the shoulder spiral parts 20 refer to those obtained by averaging the angle over the circumference of the tire in order to exclude a portion inclined at a large angle.

The axially outer edges of the shoulder reinforcing parts 7S correspond to the axially outer edges 7e of the tread reinforcing layer 7.

It is preferable that the width ws of each of the shoulder spiral parts 20 measured along the tread surface 2a of the tread portion 2 is not less than 5 % of the width Wt of the tread reinforcing layer 7. Thereby, the sense of ground contacting during full-bank cornering can be certainly improved. If the width ws of the shoulder spiral part 20 is excessively increased, the cornering power during cornering not in the full-bank state becomes small, and there is a possibility that the cornering performance is rather deteriorated.
For this reason, it is preferable that the width ws of the shoulder spiral part 20 is set to be not more than 10 % of the width Wt of the tread reinforcing layer 7.

According to the present invention, the rubber-coated cord strip 9 forming the shoulder spiral part 20 has only one reinforcing cord 10 embedded therein. Thereby, it becomes easy to adjust the cornering power caused by the shoulder region 2S to desirable values in order to improve the cornering performance, by adjusting the winding pitches of the rubber-coated cord strip 9.

In the case of such rubber-coated cord strip 9 in which only one reinforcing cord 10 is embedded, it is preferable that the width wl is, for example, 2.5 to 3.5 mm, and the thickness tl is, for example, 0.6 to 3.0 mm.

The crown reinforcing part 7C in this embodiment includes a crown spiral part 21 formed by winding the rubber-coated cord strip 9 spirally and circumferentially of the tire more than one turn. Such crown spiral part 21 can suppress the increase in the torsional rigidity of the crown region 2C to allow to generate smaller cornering power.
Therefore, reaction forces and vibrations caused by, for example, gaps of a road surface are reduced to increase the ground contact. As a result, high-speed stability performance can be improved.
In this embodiment, the crown reinforcing part 7C is made up of the crown spiral part 21 only.

It is preferable that the width wc of the crown spiral part 21 measured along the tread surface 2a of the tread portion 2 is set to be not less than 5 % of the width wt of the tread reinforcing layer 7. Thereby, the sense of ground contacting during straight running can be certainly improved.
If the width wc of the crown spiral part 21 is excessively increased, the cornering power during cornering becomes decreased, and there is a possibility that the cornering performance is deteriorated.
For this reason, it is preferable that the width Wc of the crown spiral part 21 is not more than 15 % of the width Wt of the tread reinforcing layer 7.

It is preferable that the rubber-coated cord strip 9 forming the crown spiral part 21 has only one reinforcing cord 10 embedded therein. Thereby, it becomes easy to adjust the cornering power caused by the crown region 2C to desirable values in order to improve the high-speed stability performance, by adjusting the winding pitches of the rubber-coated cord strip 9.

In the crown spiral part 21 and the shoulder spiral parts 20, the side edges 9s of the rubber-coated cord strip 9 which are adjacent to each other in the tire axial direction are in contact with each other in this embodiment, although they can be partially overlapped or separated in the tire axial direction.

Each of the middle reinforcing parts 7M in this embodiment further comprises a plurality of circumferential segments 14 in which the rubber-coated cord strip 9 extends in the tire circumferential direction.
In this embodiment, both ends in the tire circumferential direction of each of the circumferential segments 14 are connected to two of the inclining segments 13.

The plurality of circumferential segments 14 of this embodiment includes a plurality of inner circumferential segments 18 and a plurality of outer circumferential segments 19.

In this embodiment, the inner circumferential segments 18 are connected to axially inner ends 15i of the first inclining segments 15 and axially inner ends 16i of the second inclining segments 16. Such inner circumferential segments 18 can enhance the binding force to a portion close to the crown region 2C, and improves the high-speed stability performance. In addition, the inner circumferential segments 18 extending in the tire circumferential direction can reduce the change in the rigidity at the boundary between the crown reinforcing part 7C and the middle reinforcing part 7M and improve transient characteristics during cornering. Thereby, the cornering performance of the tire 1 is improved.

It is preferable that the length in the tire circumferential direction La of each of the inner circumferential segments 18 is set in a range from 50 % to 150 % of the maximum length in the tire circumferential direction Ll of the spaces 17. Thereby, the difference between the rigidity at the boundaries between the crown region 2C and the middle regions 2M, and the rigidity of the crown regions 2C and the rigidity of the middle regions 2M, is further decreased, the transient characteristics are further improved, and the inner circumferential segments 18 exert a large binding force. As a result, the cornering performance and the high-speed stabilizing performance can be further improved. In this embodiment, the maximum length Ll of the spaces 17 closest to the inner circumferential segments 18 is adopted.

In this embodiment, the inner circumferential segments 18 are provided at the same axial positions as the intersecting positions Kl, on the most tire equator C side, between the first inclining segments 15 and the second inclining segments 16. As a result, the length La in the tire circumferential direction of the inner circumferential segments 18 becomes equal to 100 % of the maximum length Ll in the tire circumferential direction of the spaces 17.

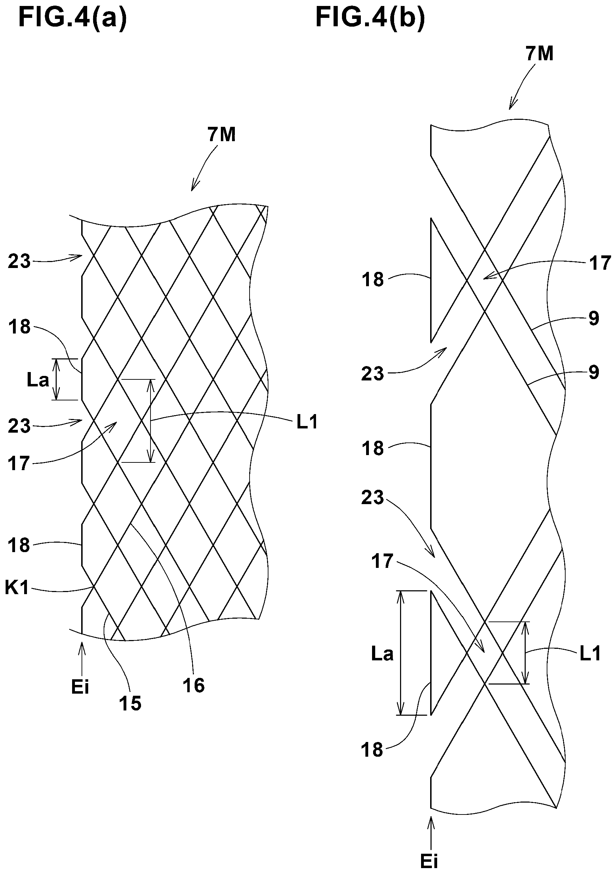

Fig. 4(a) shows the middle reinforcing parts 7M in which the length La in the tire circumferential direction of the inner circumferential segments 18 is smaller than the maximum length Ll in the tire circumferential direction of the spaces 17.
In this middle reinforcing part 7M, the inner circumferential segments 18 are arranged at the inner edge Ei with gaps 23 alternating in the tire circumferential direction. The inner circumferential segments 18 are arranged so as to be displaced in the tire axial direction from the intersecting positions Kl, on the most tire equator side, between the first inclining segments 15 and the second inclining segments 16.

Fig. 4(b) shows the middle reinforcing part 7M in which the length La in the tire circumferential direction of the inner circumferential segments 18 is larger than the maximum length L1 in the tire circumferential direction of the spaces 17. In this middle reinforcing part 7M, too, the inner circumferential segments 18 are arranged at the inner edge Ei with gaps 23 alternating in the tire circumferential direction.

In this embodiment, as shown in Fig. 3, the outer circumferential segments 19 are connected to the outer ends 15e in the tire axial direction of the first inclining segments 15 and the other ends 16e in the tire axial direction of the second inclining segments 16.
Such outer circumferential segments 19 can reduce bending stress acting on the reinforcing cords 10 of the rubber-coated cord strip 9, for example, as compared with the case where the first inclining segment 15 and the second inclining segment 16 are directly connected to each other.
Further, at the boundaries between of the shoulder reinforcing parts 7S and the middle reinforcing parts 7M, the outer circumferential segments 19 can reduce the change in the rigidity between the shoulder regions 2S and the middle regions 2M, and improve the transient characteristics during cornering with relatively large bank angles. Thereby, the cornering performance of the tire 1 can be improved.

The plurality of outer circumferential segments 19 is configured in the same manner as the plurality of inner circumferential segments 18.
It is preferable that the outer circumferential segments 19 are provided at the same axial positions as the intersecting positions K2, on the most tread edge TE side, between the first inclining segments 15 and the second inclining segments 16.

In this embodiment, by the plurality of inner circumferential segments 18, there is formed a virtual circumferentially-continuous portion 14x extending continuously in the tire circumferential direction making one turn. In this embodiment, further, by the plurality of outer circumferential segments 19, there is formed a virtual circumferentially-continuous portion 14y extending continuously in the tire circumferential direction making one turn. Such inner circumferential segments 18 and outer circumferential segments 19 can improve the transient characteristics and the sense of ground contacting during full-bank cornering, and the cornering performance can be further improved.

It is desirable that the angle θ5 of the inner circumferential segments 18 with respect to the tire circumferential direction, and the angle θ6 of the outer circumferential segments 19 with respect to the tire circumferential direction are smaller than the angle θ1 of the first inclining segments 15, and smaller than the angle θ2 of the second inclining segments 16.
The angle θ5 of the inner circumferential segments 18 and the angle θ6 of the outer circumferential segments 19 are preferably set to be not more than 5 degrees, more preferably not more than 3 degrees, still more preferably not more than 1 degree.

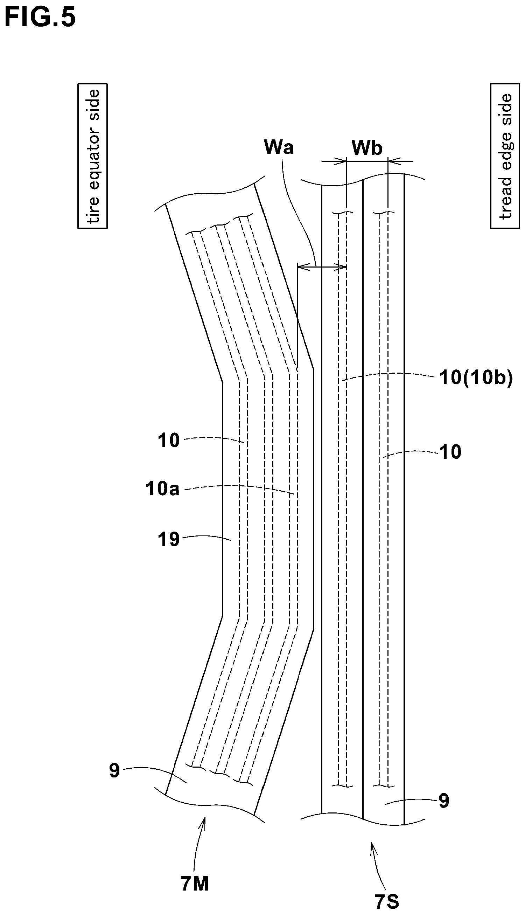

Fig. 5 is an enlarged view showing the vicinity of the boundary between the middle reinforcing part 7M and the shoulder reinforcing part 7S.

According to the present invention, as shown in Fig. 5, an axial distance Wa is smaller than 500 % of an axial distance wb, wherein
the axial distance wa is a distance between the axially outermost reinforcing cord 10a in the outer circumferential segment 19, and the reinforcing cord 10b in the shoulder reinforcing part 7S which cord is adjacent in the tire axial direction to the above-said axially outermost reinforcing cord 10a, and
the axial distance wb is a distance between the reinforcing cords 10 in the shoulder reinforcing part 7S which cords are adjacent to each other in the tire axial direction.

If the axial distance Wa is more than 500 % of the axial distance wb, then a change in the difference between the rigidity of the portion where the outer circumferential segments 19 are disposed and the rigidity of the shoulder reinforcing part 7S is increased, and there is a possibility that the transient characteristics are deteriorated when making turn with relatively large bank angles.
Therefore, it is preferable that the axial distance wa is not less than 50 % of the axial distance wb.

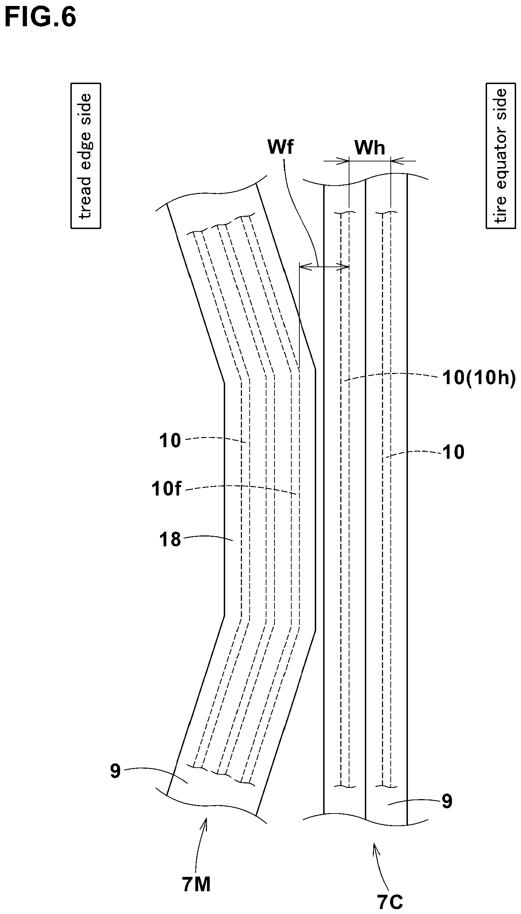

Fig. 6 is an enlarged view showing the vicinity of the boundary between the middle reinforcing part 7M and the crown reinforcing part 7C.
It is preferable that, as shown in Fig. 6, the axial distance wf is less than 500 % of the axial distance wh, wherein
the axial distance wf is a distance between the axially innermost reinforcing cord 10f in the inner circumferential segment 18, and the reinforcing cord 10h in the crown reinforcing part 7C which cord is adjacent in the tire axial direction to the axially innermost reinforcing cord 10f, and
the axial distance wh is a distance between the reinforcing cords 10 in the crown reinforcing part 7C which cords are adjacent to each other in the tire axial direction.

If the axial distance wf is more than 500 % of the axial distance wh, then a change in the difference between the rigidity of the portion where the inner circumferential segments 18 are disposed and the rigidity of the crown reinforcing part 7C is increased, and there is a possibility that the transient characteristics are deteriorated when making turn with relatively small bank angles.
Therefore, it is preferable that the axial distance wf is not less than 50 % of the axial distance Wh.

Next, a method for manufacturing such tire 1 will be described.

The tire 1 in this embodiment is manufactured through a step of forming a green tire and a step of vulcanization molding the green tire.

The step of forming the green tire includes a tread reinforcing layer forming step for forming the tread reinforcing layer 7 described above.

The tread reinforcing layer forming step includes a winding step of winding the long rubber-coated cord strip 9. Except for the winding step in the tread reinforcing layer forming step, descriptions of the step of forming the green tire and the step of vulcanization molding the green tire are omitted since known steps can be adopted therefor.

The winding step in this embodiment includes a crown winding step, a first middle winding step, a second middle winding step, a first shoulder winding step and a second shoulder winding step.
In the crown winding step of this embodiment, a crown reinforcing part 7C is formed.
In the first middle winding step of this embodiment, one of the middle reinforcing parts 7M is formed.
In the second middle winding step of this embodiment, the other of the middle reinforcing parts 7M is formed.
In the first shoulder winding step of this embodiment, one of the shoulder reinforcing parts 7S is formed.
In the second shoulder winding step of this embodiment, the other of the shoulder reinforcing parts 7S is formed.
In this embodiment, each of the reinforcing parts 7C, 7M and 7S is formed from one rubber-coated cord strip 9.

In the winding step of this embodiment, the first shoulder winding step, the first middle winding step, the crown winding step, the second middle winding step, and the second shoulder winding step are carried out in this order. The winding step is however, not limited to such mode. For example, it may be started from the crown winding step or the first middle winding step.

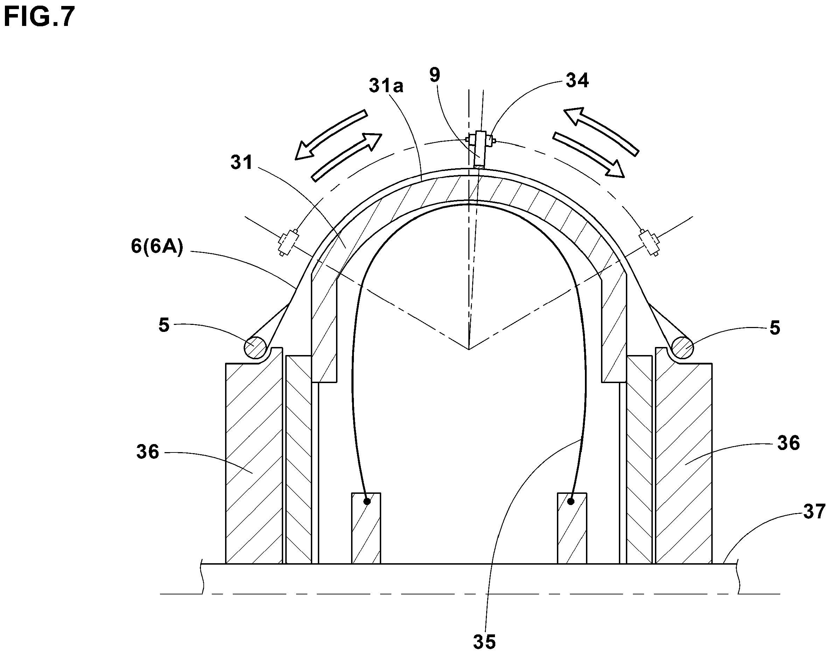

Fig. 7 is a diagram for explaining the winding step. As shown in Fig. 7, in the winding step, the rubber-coated cord strip 9 is wound on the outer circumferential surface 31a of a profiled drum 31, directly or indirectly through the carcass 6.

The profile drum 31 in this embodiment is of a well-known structure having an outer circumferential surface 31a provided with a profile curved convexly toward the radially outside. The profile drum 31 is composed of a plurality of segments, for example, and the outer circumferential surface 31a is configured to be expandable/contractible by radially moving an expansion device 35 disposed inside the profile drum 31.

On both sides of the profile drum 31, for example, a pair of carcass holding devices 36 of a well-known structure are disposed. The carcass holding device 36 is a ring-shaped member movable in the axial direction, and attached to the support shaft 37, and can rotate concentrically and integrally with the profile drum 31. The carcass holding devices 36 can hold the cylindrical carcass 6 together with the bead cores 5.

The rubber-coated cord strip 9 is continuously supplied to the profile drum 31 by, for example, a known applicator 34. The applicator 34 is reciprocated in an arced locus along the outer circumferential surface 31a of the profile drum 31 by, for example, a well-known three-dimensional moving device (not shown) or the like. As a result, the rubber-coated cord strip 9 is wound on the outer circumferential surface 31a.

First, the first shoulder winding step is performed. The rubber-coated cord strip 9 wound in the first shoulder winding step has only one reinforcing cord 10 embedded therein.

In the first shoulder winding step of this embodiment, by the use of the applicator 34, the rubber-coated cord strip 9 is spirally wound more than one turn from one of the axial edges to the other of the shoulder reinforcing parts 7S. However, it is also possible that the rubber-coated cord strip 9 is spirally wound from the other axial edge to the one axial edge of the shoulder reinforcing part 7S.

In the first shoulder winding step, it is preferable that the winding start end and the winding stop end of the rubber-coated cord strip 9 are placed at substantially same circumferential points at different axial positions.

Next, the first middle winding step is performed.

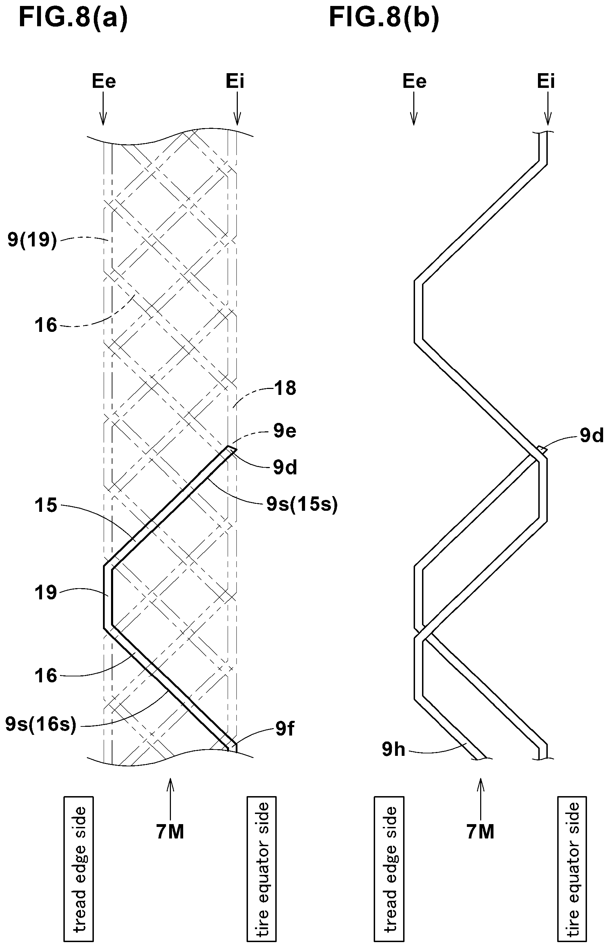

Fig. 8(a) is a plan view showing a state of one of the middle reinforcing part 7M immediately after the winding of the rubber-coated cord strip 9 is started, wherein turns of the rubber-coated cord strip 9 not yet wound are indicated by imaginary lines, and
a turn of the rubber-coated cord strip 9 partially wound is indicated by solid lines and reference numeral 9f.

Fig. 8(b) is a plan view showing a state of the middle reinforcing part 7M when the winding of the rubber-coated cord strip 9 has been progressed more than Fig. 8(a), wherein a turn of the rubber-coated cord strip 9 partially wound is indicated by reference numeral 9h.

In the first middle winding step, as shown in Fig. 8(a), the winding start end 9d at the beginning of winding of the rubber-coated cord strip 9 is firstly fixed to, for example, the inner edge Ei of the middle reinforcing part 7M. Incidentally, the winding start end 9d may be fixed to the outer edge Ee or a position on one of the inclining portions 13 of the middle reinforcing part 7M.
The rubber-coated cord strip 9 wound in the first middle winding step has a plurality of the reinforcing cords 10, for example, three reinforcing cords 10 embedded therein.

Then, in the first middle winding step, the applicator 34 supplies the rubber-coated cord strip 9 to the outer circumferential surface 31a of the rotating profiled drum 31 while reciprocating between the inner edge Ei and the outer edge Ee.
In this step, as shown in Fig. 8(a), the rubber-coated cord strip 9 is wound zigzag, comprising the first inclining segments 15 and the second inclining segments 16, so that the side edges 9s (shown in Fig. 2) of the rubber-coated cord strip 9 do not contact with each other.

In the first middle winding step of this embodiment, the rubber-coated cord strip 9 is wound in the order of the first inclining segment 15, the outer circumferential segment 19, the second inclining segment 16, the inner circumferential segment 18 and the first inclining segment 15 ---.

In this embodiment, therefore, both ends of each of the inner circumferential segments 18 are connected to one of the first inclining segments 15 and one of the second inclining segments 16, and
both ends of each of the outer circumferential segments 19 are connected to one of the first inclining segments 15 and one of the second inclining segments 16.
Through this step, the rubber-coated cord strip 9 can be formed into a mesh having rhombic spaces 17 surrounded by the first inclining segments 15 and the second inclining segments 16.

In the first middle winding step of this embodiment, one end of each inner circumferential segment 18 substantially coincides in the tire circumferential direction with the other end of one of the inner circumferential segments 18 which is adjacent in the tire circumferential direction to the above-said one end. Such arrangement further enhances the binding force at the boundary portion between the crown reinforcing part 7C and the middle reinforcing parts 7M, and further enhances the high-speed stability performance.

Further, in this embodiment, one end of each outer circumferential segment 19 substantially coincides in the tire circumferential direction with the other end of one of the outer circumferential segments 19 which is adjacent in the tire circumferential direction to the above-said one end. Thereby, the cornering performance is further improved.

The first middle winding step is however, not limited to such arrangement. For example, it is possible that one end of each inner circumferential segment 18 is separated in the tire circumferential direction from the other end of one of the inner circumferential segments 18 which is adjacent in the tire circumferential direction to the above-said one end. Further, it is possible that one end of each inner circumferential segment 18 is overlapped in the tire circumferential direction with the other end of one of the inner circumferential segments 18 which is adjacent in the tire circumferential direction to the above-said one end.

In the first middle winding step, it is preferable that the winding stop end 9e of the rubber-coated cord strip 9 when ending the winding is fixed so as to continue to the winding start end 9d in the tire circumferential direction.

In this embodiment, the inner circumferential segments 18 are arranged in line, and form corners with the first inclining segments 15 and the second inclining segments 16, and the outer circumferential segments 19 are arranged in line, and form corners with the first inclining segments 15 and the second inclining segments 16.

Next, the crown winding step is performed. In the crown winding step in this embodiment, one rubber-coated cord strip 9 different from that in the first middle winding step is used. In the rubber-coated cord strip 9 wound in the crown winding step, a single reinforcing cord 10 is embedded along the longitudinal direction.

In the crown winding step in this embodiment, by the use of the applicator 34, the rubber-coated cord strip 9 is spirally wound from one of the axial edges toward the other of the axial edges of the crown reinforcing part 7C more than one turn. In the crown winding step, it is also possible to spirally wind the rubber-coated cord strip 9 from the other axial edge to the one axial edge of the crown reinforcing part 7C.
In the crown winding step, it is preferable that the winding start end and the winding stop end of the rubber-coated cord strip 9 are fixed to substantially same circumferential points at different axial positions.

Next, the second middle winding step and the second shoulder winding step are performed. In this embodiment, the second middle winding step is performed by using one rubber-coated cord strip 9 different from that in the crown winding step. In this embodiment, the second shoulder winding step is performed by using one rubber-coated cord strip 9 different from that in the second middle winding step.
Since the second middle winding step is performed in the same manner as the first middle winding step, its detailed explanation is omitted. Since the second shoulder winding step is performed in the same manner as the first shoulder winding step, its detailed explanation is omitted.
In this way, the tread reinforcing layer 7 is formed.

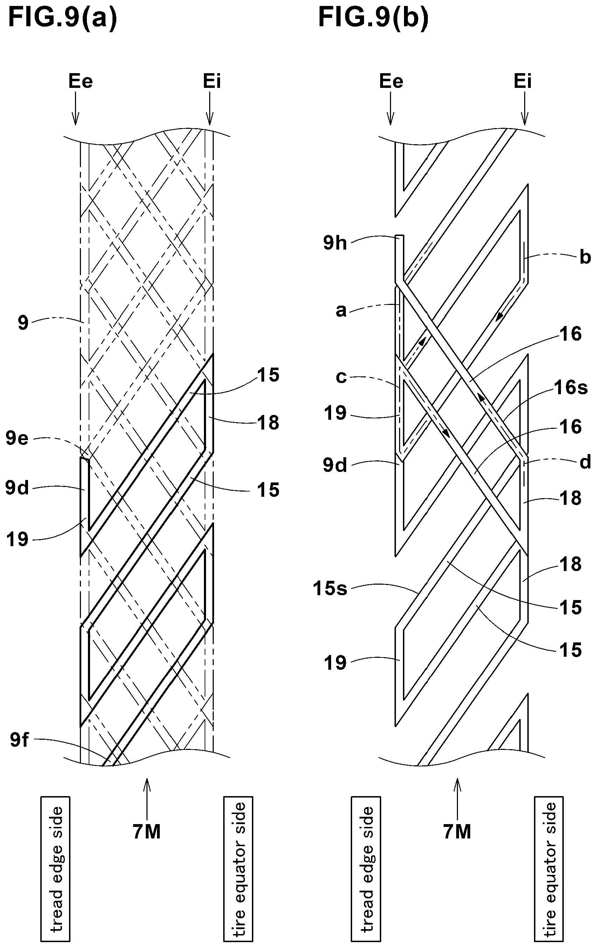

Figs. 9(a) and 9(b) schematically show a first middle winding step or a second middle winding step of another embodiment.

Fig. 9(a) is a plan view showing a state of the middle reinforcing part 7M immediately after the winding of the rubber-coated cord strip 9 is started, wherein
turns of the rubber-coated cord strip 9 not yet wound are indicated by imaginary lines, and
a turn of the rubber-coated cord strip 9 partially wound is indicated by solid lines and reference numeral 9f.

Fig. 9(b) is a plan view showing a state of the middle reinforcing part 7M when the winding of the rubber-coated cord strip 9 has been progressed more than Fig. 9(a), wherein one turn of the rubber-coated cord strip 9 and a turn partially wound are indicated by reference numeral 9h, and the rubber-coated cord strip 9 is wound in the order indicated by allowed imaginary lines a, b, c and d.

The same reference numerals are given to the same parts as those in the embodiment of Fig. 8, and the description thereof is omitted. Also in this embodiment, since the second middle winding step is the same as the first middle winding step, a detailed description thereof will be omitted.

In the first middle winding step of this embodiment, the winding start end 9d at the beginning of winding of the rubber-coated cord strip 9 is fixed to the outer edge Ee of the middle reinforcing part 7M. Incidentally, the winding start end 9d may be fixed to the inner edge Ei or a position on one of the inclining portions 13 of the middle reinforcing parts 7M.

Next, the applicator 34 supplies the rubber-coated cord strip 9 to the outer circumferential surface 31a of the rotating profiled drum 31 while reciprocating between the inner edge Ei and the outer edge Ee.
In this step, as shown in Fig. 9(a), firstly, the rubber-coated cord strip 9 is wound in the order of a first inclining segment 15, an inner circumferential segment 18, a first inclining segment 15, an outer circumferential segment 19, a first inclining segment 15 ---. Next, as shown in Fig. 9(b), the rubber-coated cord strip 9 is wound in the order of a second inclining segment 16, an inner circumferential segment 18, a second inclining segment 16, an outer circumferential segment 19, a second inclining segment 16 ---.
That is, in this embodiment, the middle reinforcing part 7M is formed such that both ends of each inner circumferential segment 18 are connected to two of the first inclining segments 15 adjacent to each other in the tire circumferential direction, or alternatively two of the second inclining segments 16 adjacent to each other in the tire circumferential direction.

And the side edges 15s of the plurality of first inclining segments 15 are disposed so as not to contact with each other, and the side edges 16s of the plurality of second inclining segments 16 are arranged so as not to contact with each other. As a result, the middle reinforcing part 7M is provided with a mesh structure having a plurality of rhombic spaces 17 surrounded by the first inclining segments 15 and the second inclining segments 16.

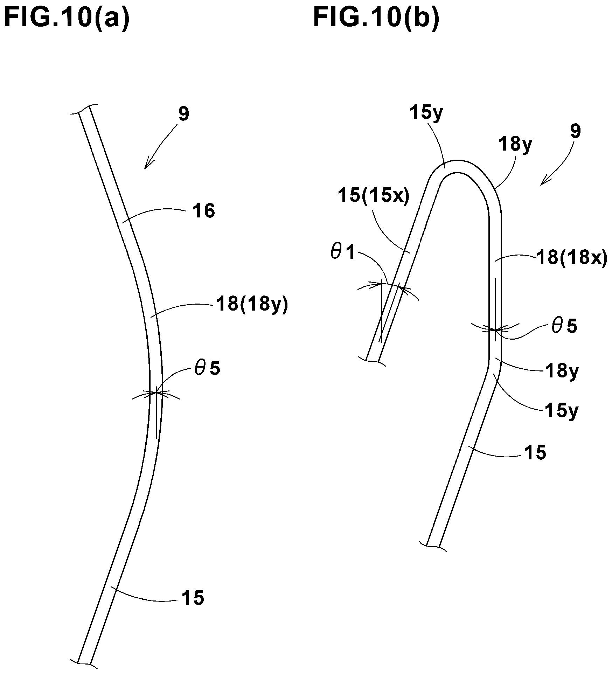

Fig. 10(a) is a plan view showing another example of the connection of the first inclining segment 15, the second inclining segment 16 and the inner circumferential segment 18.
In this example, the inner circumferential segment 18 includes an arcuate portion 18y.
In this example, the inner circumferential segments 18 is formed by the arcuate portion 18y only.
In this example, the arcuate portion 18y is smoothly connected to the first inclining segment 15 and the second inclining segment 16.
In this example, the angle θ5 of the inner circumferential segment 18 is set in a range of not more than 5 degrees with respect to the tire circumferential direction.

In addition to the inner circumferential segments 18, the outer circumferential segment 19 may be formed by an arcuate portion so as to be smoothly continuous with the first inclining segment 15 and the second inclining segment 16 in the same manner as shown in Fig. 10(a). As a result, the bending stress acting on the reinforcing cords 10 of the rubber-coated cord strip 9 is reduced, and the cornering performance is improved.

Fig. 10(b) is a plan view showing another example of the connection of the inner circumferential segment 18 and the inclining segments 13 (in the figure, first inclining segments 15). In this example, the first inclining segment 15 comprises a main portion 15x extending substantially straight at the above-mentioned angle θ1 of more than 5 degrees with respect to the tire circumferential direction, and
an arcuate portion 15y smoothly continued from the main portion 15x and extending in an arc shape.
The inner circumferential segment 18 comprises a main portion 18x extending substantially straight at the above-mentioned angle θ5 smaller than that of the first inclining segments 15, and an arcuate portion 18y smoothly continued from the main portion 18x and extending in an arc shape.
The main portion 15x of the first inclining segment 15 and the main portion 18x of the inner circumferential segment 18 are smoothly connected via the arcuate portion 15y and the arcuate portion 18y.
It is needless to say that such connection mode can be applied to the connection between the second inclining segment 16 and the inner circumferential segments 18, the connection between the outer circumferential segment 19 and the first inclining segment 15, and/or the connection between the outer circumferential segment 19 and the second inclining segment 16.

### working examples

Motorcycle tires having the basic structure shown in Fig. 1 and tread reinforcing layers formed based on that shown in Fig. 3 were experimentally manufactured. The specifications are shown in Table 1.

In the tread reinforcing layer of Comparative example 1, the shoulder reinforcing parts 7S (namely, shoulder spiral parts) were omitted, and the mesh structure of each middle reinforcing part 7M is extended to the axially outer edge 7e of the tread reinforcing layer.

These tires were tested for high-speed stability performance, cornering performance and cornering force. Common specifications are as follows.
Rubber-coated cord strip for the middle reinforcing parts: 4.0 mm in width, 1.0 mm in thickness, three reinforcing cords embedded
Rubber-coated cord strip for the crown reinforcing part and the shoulder reinforcing parts: 2.5 mm in width, 1.0 mm in thickness, one reinforcing cord embedded
width wt of the tread reinforcing layer: 90 % of TW

Test methods are as follows.

### < High-speed stability performance and cornering performance >

The test tires were mounted on all wheels of a 130cc motorcycle under the following conditions.
Front wheel: tire size 120/70ZR17, rim size 17M/CxMT3.50, tire pressure 250 kPa
Rear wheel: tire size 190/55ZR17, rim size 17M/CxMT5.50, tire pressure 250 kPa

The motorcycle was run on a dry asphalt road in a test course, and the test tire was evaluated by the test rider based on high-speed running characteristics relating to handling stability, grip and the like, and cornering performance relating to transient characteristics during cornering, operability of the handle and the like.
The results are indicated in Table 1 by an index based on Comparative Example 1 being 100, wherein the larger value is better.

### < Cornering force (Cornering Power) >

Using an indoor tire testing machine, the cornering force of each test tire was measured under the following conditions in order to obtain
a value CF(-1 degree) at the slip angle of -1 degree and
a value CF(+1 degree) at the slip angle of +1 degree.
   Tire size: 190/55 ZR 17
   Tire pressure: 200 kPa
   Tire load: 1.3 kN
   Running speed: 30 km/h
Then, the cornering power was obtained as {CF(+1 degree) - CF(-1 degrees)}/2. Namely, the cornering power obtained herein is the cornering force per 1 degree of the slip angle. The results are indicated in Table 1 by an index based on Comparative Example 1 being 100, wherein the larger the value, the higher the cornering power.

**Table 1**

| Tire | comparative 1 | example 1 | example 2 | example 3 | example 4 |
|---|---|---|---|---|---|
| shoulder spiral part | absent | present | present | present | present |
| La/L1 (%) | 100 | 100 | 100 | 100 | 100 |
| Ws/Wt (%) | - | 5 | 3 | 10 | 15 |
| Wc/Wt (%) | 3 | 10 | 10 | 10 | 10 |
| high-speed stability performance | 100 | 110 | 110 | 110 | 110 |
| cornering performance | 100 | 120 | 110 | 115 | 110 |
| cornering force | 100 | 120 | 115 | 120 | 115 |
| | | | | | |

| Tire | example 5 | example 6 | example 7 | example 8 | |
|---|---|---|---|---|---|
| shoulder spiral part | present | present | present | present | |
| La/L1 (%) | 100 | 100 | 100 | 100 | |
| Ws/Wt (%) | 5 | 5 | 5 | 5 | |
| Wc/Wt (%) | 4 | 5 | 15 | 18 | |
| high-speed stability performance | 105 | 110 | 110 | 115 | |
| cornering performance | 120 | 120 | 115 | 110 | |
| cornering force | 110 | 120 | 115 | 110 | |

As a result of the tests, it was confirmed that the tire of each example is superior in balance to the tire of the comparative example.

### Description of the reference signs

- 1: motorcycle tire
- 7S: shoulder reinforcing part
- 7M: middle reinforcing part
- 9: rubber-coated cord strip
- 13: inclining segment
- 14: circumferential segments
- 15: first inclining segments
- 15s: side edges
- 16: second inclining segments
- 16s: side edges
- 17: spaces
- 20: shoulder spiral part

## Claims

1. A motorcycle tire (1) comprising:
a toroidal carcass (6), and
a tread reinforcing layer (7) disposed radially outside the carcass (6) in a tread portion (2),
the tread reinforcing layer (7) comprising
a pair of shoulder reinforcing parts (7S) each formed by winding a rubber-coated cord strip (9) of at least one rubberized reinforcing cord (10) covered with topping rubber (11), around one of shoulder regions (2S), and a pair of middle reinforcing parts (7M) each formed by winding a rubber-coated cord strip (9), around one of middle regions (2M) axially inside the shoulder regions (2S),
wherein
each of the middle reinforcing parts (7M) comprises
a plurality of first inclining segments (15) in which the rubber-coated cord strip (9) is inclined to one side with respect to the tire circumferential direction, and
a plurality of second inclining segments (16) in which the rubber-coated cord strip (9) is inclined to the other side opposite to the plurality of first inclining segments (15), with respect to the tire circumferential direction, wherein
side edges (15s) of the first inclining segments (15) are arranged so as not to contact with each other, and side edges (16s) of the second inclining segments (16) are arranged so as not to contact with each other, whereby a mesh structure having a plurality of rhombic spaces (17) surrounded by the first inclining segments (15) and the second inclining segments (16) is formed, and
each of the shoulder reinforcing parts (7S) includes a shoulder spiral part (20) in which the rubber-coated cord strip (9) is wound spirally and circumferentially of the tire more than one turns,
each of the middle reinforcing parts (7M) comprises a plurality of circumferential segments (14) in which the rubber-coated cord strip (9) extends in the tire circumferential direction continuously from the axially inner ends of the first inclining segments (15) and second inclining segments (16),
the plurality of circumferential segments (14) includes a plurality of outer circumferential segments (19), and
an axial distance Wa is smaller than 500 % of an axial distance Wb, wherein
the axial distance Wa is a distance between the axially outermost reinforcing cord (10a) in the outer circumferential segment (19) and the reinforcing cord (10b) in the shoulder reinforcing part (7S) which cord is adjacent in the tire axial direction to the axially outermost reinforcing cord (10a),and
the axial distance Wb is a distance between the reinforcing cords (10) in the shoulder reinforcing part (7S) which cords are adjacent to each other in the tire axial direction,
and wherein the rubber-coated cord strip (9) forming the shoulder spiral part (20) has only one reinforcing cord (10).

2. The motorcycle tire (1) according to claim 1, wherein each of the middle reinforcing parts (7M) comprises a plurality of inner circumferential segments (18) in which the rubber-coated cord strip (9) extends in the tire circumferential direction continuously from axially inner ends of the first inclining segments (15) and second inclining segments (16), and
the length (La) in the tire circumferential direction of the inner circumferential segments (18) is in a range from 50 % to 150 % of the maximum length (L1) in the tire circumferential direction of the spaces (17).

3. The motorcycle tire (1) according to claim 1 or 2, wherein the width (Ws) measured along the tread surface of the tread portion (2), of each shoulder spiral part (20) is not less than 5 % of the width (Wt) measured along the tread surface of the tread portion (2), of the tread reinforcing layer (7).

4. The motorcycle tire (1) according to claim 1, 2 or 3, wherein the tread portion (2) has a crown region between the middle regions (2M), and
the tread reinforcing layer (7) comprises a crown reinforcing part including a crown spiral part (21) in which the rubber-coated cord strip (9) is wound spirally and circumferentially of the tire, around the crown region more than one turn.

5. The motorcycle tire (1) according to claim 4, wherein the width (Wc) measured along the tread surface of the tread portion (2), of the crown spiral part (21) is not less than 5 % of the width (Wt) measured along the tread surface of the tread portion (2), of the tread reinforcing layer (7).

6. The motorcycle tire (1) according to claim 4 or 5, wherein the rubber-coated cord strip (9) forming the crown spiral part (21) has only one reinforcing cord (10).

7. The motorcycle tire (1) according to any one of claims 1-6, wherein each of the middle reinforcing parts (7M) comprises a plurality of inner circumferential segments (18) in which the rubber-coated cord strip (9) extends in the tire circumferential direction continuously from the axially inner ends of the first inclining segments (15) and second inclining segments (16), and
both ends of each of the inner circumferential segments (18) are connected to two of the circumferentially adjacent first inclining segments (15) or alternatively two of the circumferentially adjacent second inclining segments (16).

8. The motorcycle tire (1) according to any one of claims 1-6, wherein
both ends of each of circumferential segments (14) are connected to one of first inclining segments (15) and one of the second inclining segments (16).

## Patentansprüche

1. Motorradreifen (1) mit:
einer toroidalen Karkasse (6), und
einer Laufflächenverstärkungsschicht (7), die radial außerhalb der Karkasse (6) in einem Laufflächenabschnitt (2) angeordnet ist,
wobei die Laufflächenverstärkungsschicht (7)
ein Paar Schulterverstärkungsteile (7S), die jeweils durch Wickeln eines gummibeschichteten Cordstreifens (9) aus mindestens einem gummierten Verstärkungscord (10), der mit Abdeckgummi (11) überzogen ist, um einen von Schulterbereichen (2S) gebildet ist, und ein Paar mittlerer Verstärkungsteile (7M) aufweist, die jeweils durch Wickeln eines gummibeschichteten Cordstreifens (9) um einen von mittleren Bereichen (2M) gebildet ist, die axial innerhalb der Schulterbereiche (2S) liegen,
wobei
jeder der mittleren Verstärkungsteile (7M)
eine Vielzahl von ersten geneigten Segmenten (15), in welchen der gummibeschichtete Cordstreifen (9) mit Bezug auf die Reifenumfangsrichtung zu einer Seite hin geneigt ist, und
eine Vielzahl von zweiten geneigten Segmenten (16) aufweist, in welchen der gummibeschichtete Cordstreifen (9) mit Bezug auf die Reifenumfangsrichtung entgegengesetzt zu der Vielzahl von ersten geneigten Segmenten (15) zu der anderen Seite hin geneigt ist, wobei
Seitenränder (15s) der ersten geneigten Segmente (15) angeordnet sind, sodass sie einander nicht berühren, und Seitenränder (16s) der zweiten geneigten Segmente (16) angeordnet sind, sodass sie einander nicht berühren, wodurch eine Netzstruktur mit einer Vielzahl von rautenförmigen Räumen (17) gebildet wird, die von den ersten geneigten Segmenten (15) und den zweiten geneigten Segmenten (16) umgeben sind,
jeder der Schulterverstärkungsteile (7S) einen spiralförmigen Schulterteil (20) hat, in welchem der gummibeschichtete Cordstreifen (9) spiralförmig und umlaufend mehr als einen Umlauf um den Reifen gewickelt ist,
jeder der mittleren Verstärkungsteile (7M) eine Vielzahl von Umfangssegmenten (14) aufweist, in welchen sich der gummibeschichtete Cordstreifen (9) fortlaufend von den axial inneren Enden der ersten geneigten Segmente (15) und der zweiten geneigten Segmente (16) in der Reifenumfangsrichtung erstreckt,
die Vielzahl von Umfangssegmenten (14) eine Vielzahl von äußeren Umfangssegmenten (19) hat, und
ein axialer Abstand Wa kleiner ist als 500 % eines axialen Abstands Wb, wobei
der axiale Abstand Wa ein Abstand zwischen dem axial äußersten Verstärkungscord (10a) in dem äußeren Umfangssegment (19) und dem Verstärkungscord (10b) in dem Schulterverstärkungsteil (7S) ist, welcher Cord in der axialen Richtung des Reifens zu dem axial äußersten Verstärkungscord (10a) benachbart ist, und
der axiale Abstand Wb ein Abstand zwischen den Verstärkungscords (10) in dem Schulterverstärkungsteil (7S) ist, welche Cords in der axialen Richtung des Reifens zueinander benachbart sind,
und wobei
der gummibeschichtete Cordstreifen (9), der den spiralförmigen Schulterteil (20) bildet, nur einen Verstärkungscord (10) hat.

2. Motoradreifen (1) nach Anspruch 1, wobei jeder der mittleren Verstärkungsteile (7M) eine Vielzahl von inneren Umfangssegmenten (18) aufweist, in welchen sich der gummibeschichtete Cordstreifen (9) fortlaufend von axial inneren Enden der ersten geneigten Segmente (15) und der zweiten geneigten Segmente (16) in der Reifenumfangsrichtung erstreckt, und
die Länge (La) in der Reifenumfangsrichtung der inneren Umfangssegmente (18) in einem Bereich von 50 % bis 150 % der maximalen Länge (L1) der Räume (17) in der Reifenumfangsrichtung liegt.

3. Motoradreifen (1) nach Anspruch 1 oder 2, wobei die Breite (Ws) von jedem spiralförmigen Schulterteil (20), gemessen entlang der Lauffläche des Laufflächenabschnitts (2), nicht weniger als 5 % der Breite (Wt) der Laufflächenverstärkungsschicht (7), gemessen entlang der Lauffläche des Laufflächenabschnitts (2), beträgt.

4. Motoradreifen (1) nach Anspruch 1, 2 oder 3, wobei der Laufflächenabschnitt (2) einen Kronenbereich zwischen den mittleren Bereichen (2M) hat, und
die Laufflächenverstärkungsschicht (7) einen Kronenverstärkungsteil aufweist, der einen spiralförmigen Kronenteil (21) hat, in welchem der gummibeschichtete Cordstreifen (9) spiralförmig und in Umfangsrichtung des Reifens mehr als einen Umlauf um den Kronenbereich gewickelt ist.

5. Motoradreifen (1) nach Anspruch 4, wobei die Breite (Wc) des spiralförmigen Kronenteils (21), gemessen entlang der Lauffläche des Laufflächenabschnitts (2), nicht weniger als 5 % der Breite (Wt) der Laufflächenverstärkungsschicht (7), gemessen entlang der Lauffläche des Laufflächenabschnitts (2), beträgt.

6. Motoradreifen (1) nach Anspruch 4 oder 5, wobei der gummibeschichtete Cordstreifen (9), der den spiralförmigen Kronenteil (21) bildet, nur einen Verstärkungscord (10) hat.

7. Motoradreifen (1) nach einem der Ansprüche 1 bis 6, wobei jeder der mittleren Verstärkungsteile (7M) eine Vielzahl von inneren Umfangssegmenten (18) hat, in welchen sich der gummibeschichtete Cordstreifen (9) fortlaufend von den axial inneren Enden der ersten geneigten Segmente (15) und der zweiten geneigten Segmente (16) in der Reifenumfangsrichtung erstreckt, und
beide Enden von jedem der inneren Umfangssegmente (18) mit zwei der in Umfangsrichtung benachbarten ersten geneigten Segmente (15) oder alternativ mit zwei der in Umfangsrichtung benachbarten zweiten geneigten Segmente (16) verbunden sind.

8. Motoradreifen (1) nach einem der Ansprüche 1 bis 6, wobei
beide Enden von jedem der Umfangssegmente (14) mit einem der ersten geneigten Segmente (15) und einem der zweiten geneigten Segmente (16) verbunden sind.

## Revendications

1. Pneumatique (1) de moto comprenant :
une carcasse toroïdale (6), et
une couche de renforcement de bande de roulement (7) disposée radialement à l'extérieur de la carcasse (6) dans une partie de bande de roulement (2),
la couche de renforcement de bande de roulement (7) comprenant :
une paire de parties de renforcement d'épaulement (7S) chacune formées en enroulant une bande de corde recouverte de caoutchouc (9) d'au moins une corde de renforcement caoutchoutée (10) couverte avec du caoutchouc de gommage (11), autour de l'une des régions d'épaulement (2S), et une paire de parties de renforcement centrales (7M) chacune formées en enroulant une bande de corde recouverte de caoutchouc (9), autour de l'une des régions centrales (2M) axialement à l'intérieur des régions d'épaulement (2S),
dans lequel :
chacune des parties de renforcement centrales (7M) comprend :
une pluralité de premiers segments d'inclinaison (15) dans lesquels la bande de corde recouverte de caoutchouc (9) est inclinée vers un côté par rapport à la direction circonférentielle du pneu, et
une pluralité de seconds segments d'inclinaison (16) dans lesquels la bande de corde recouverte de caoutchouc (9) est inclinée vers l'autre côté opposé à la pluralité de premiers segments d'inclinaison (15), par rapport à la direction circonférentielle du pneu, dans lequel :
les bords latéraux (15s) des premiers segments d'inclinaison (15) sont agencés afin de ne pas être en contact entre eux, et les bords latéraux (16s) des seconds segments d'inclinaison (16) sont agencés afin de ne pas être en contact entre eux, moyennant quoi une structure en maille ayant une pluralité d'espaces rhombiques (17) entourés par les premiers segments d'inclinaison (15) et les seconds segments d'inclinaison (16), est formée, et
chacune des parties de renforcement d'épaulement (7S) comprend une partie de spirale d'épaulement (20) dans laquelle la bande de corde recouverte de caoutchouc (9) est enroulée en spirale et de manière circonférentielle par rapport au pneu sur plus d'un tour,
chacune des parties de renforcement centrales (7M) comprend une pluralité de segments circonférentiels (14) dans lesquels la bande de corde recouverte de caoutchouc (9) s'étend dans la direction circonférentielle du pneu de manière continue à partir des extrémités axialement internes des premiers segments d'inclinaison (15) et des seconds segments d'inclinaison (16),
la pluralité de segments circonférentiels (14) comprend une pluralité de segments circonférentiels externes (19), et
une distance axiale Wa est inférieure à 500 % d'une distance axiale Wb, dans lequel la distance axiale Wa est une distance entre la corde de renforcement axialement la plus à l'extérieur (10a) dans le segment circonférentiel externe (19) et la corde de renforcement (10b) dans la partie de renforcement d'épaulement (7S), laquelle corde est adjacente à la direction axiale du pneu jusqu'à la corde de renforcement axialement la plus à l'extérieur (10a), et
la distance axiale Wb est une distance entre les cordes de renforcement (10) dans la partie de renforcement d'épaulement (7S), lesquelles cordes sont adjacentes entre elles dans la direction axiale du pneu,
et dans lequel la bande de corde recouverte de caoutchouc (9) formant la partie de spirale d'épaulement (20) a une seule corde de renforcement (10).

2. Pneumatique (1) de moto selon la revendication 1, dans lequel chacune des parties de renforcement centrales (7M) comprend une pluralité de segments circonférentiels internes (18) dans lesquels la bande de corde recouverte de caoutchouc (9) s'étend dans la direction circonférentielle du pneu de manière continue à partir des extrémités axialement internes des premiers segments d'inclinaison (15) et des seconds segments d'inclinaison (16), et
la longueur (La) dans la direction circonférentielle du pneu des segments circonférentiels internes (18) est dans une plage de 50 % à 150 % de la longueur maximum (L1) dans la direction circonférentielle du pneu des espaces (17).

3. Pneumatique (1) de moto selon la revendication 1 ou 2, dans lequel la largeur (Ws) mesurée le long de la surface de bande de roulement de la partie de bande de roulement (2), de chaque partie de spirale d'épaulement (20) n'est pas inférieure à 5 % de la largeur (Wt) mesurée le long de la surface de bande de roulement de la partie de bande de roulement (2) de la couche de renforcement de bande de roulement (7).

4. Pneumatique (1) de moto selon la revendication 1, 2 ou 3, dans lequel la partie de bande de roulement (2) a une région de sommet entre les régions centrales (2M), et
la couche de renforcement de bande de roulement (7) comprend une partie de renforcement de sommet comprenant une partie de spirale de sommet (21) dans laquelle la bande de corde recouverte de caoutchouc (9) est enroulée en spirale et de manière circonférentielle par rapport au pneu, autour de la région de sommet sur plus d'un tour.

5. Pneumatique (1) de moto selon la revendication 4, dans lequel la largeur (Wc) mesurée le long de la surface de bande de roulement de la partie de bande de roulement (2) de la partie de spirale de sommet (21) n'est pas inférieure à 5 % de la largeur (Wt) mesurée le long de la surface de bande de roulement de la partie de bande de roulement (2) de la couche de renforcement de bande de roulement (7).

6. Pneumatique (1) de moto selon la revendication 4 ou 5, dans lequel la bande de corde recouverte de caoutchouc (9) formant la partie de spirale de sommet (21) a une seule corde de renforcement (10).

7. Pneumatique (1) de moto selon l'une quelconque des revendications 1 à 6, dans lequel chacune des parties de renforcement centrales (7M) comprend une pluralité de segments circonférentiels internes (18) dans lesquels la bande de corde recouverte de caoutchouc (9) s'étend dans la direction circonférentielle du pneu de manière continue à partir des extrémités axialement internes des premiers segments d'inclinaison (15) et des seconds segments d'inclinaison (16), et
les deux extrémités de chacun des segments circonférentiels internes (18) sont raccordées aux deux premiers segments d'inclinaison (15) circonférentiellement adjacents ou en variante aux deux des segments d'inclinaison (16) circonférentiellement adjacents.

8. Pneumatique (1) de moto selon l'une quelconque des revendications 1 à 6, dans lequel les deux extrémités de chacun des segments circonférentiels (14) sont raccordées à l'un des premiers segments d'inclinaison (15) et à l'un des seconds segments d'inclinaison (16).
